# FASCICULE DE BREVET EUROPEEN

(11) **EP 0 503 365 B1**
(45) Date de publication et mention de la délivrance du brevet: **11.10.1995**
(21) Numéro de dépôt: 92103229.8
(22) Date de dépôt: 26.02.1992
(51) Int. Cl.: B65G 13/10

(54) **Tables à billes motorisées à mouvements croisés pour le triage orthogonal de charges plates**
Angetriebener Kugeltisch zum orthogonalen Sortieren flacher Gegenstände
Driven ball table for the orthogonal sorting of flat objects

(30) Priorité: 15.03.1991 FR 9103543
(43) Date de publication de la demande: 16.09.1992
(73) Titulaire: BOBST S.A., CH-1001 Lausanne (CH)
(72) Inventeur: Lucas, Jean-Jacques, F-33730 Prechac (FR)
(74) Mandataire: Colomb, Claude

(56) Documents cités:
- EP-A- 0 369 133
- WO-A-89/07081
- FR-A- 2 167 878
- FR-A- 2 224 379
- GB-A- 2 174 966

## Description

La présente invention a trait à une table à billes motorisées à mouvements croisés pour le triage orthogonal de charges plates.
Dans l'industrie, on doit souvent déplacer des charges orthogonalement d'un point à un autre, par exemple entre une machine de production et un dispositif de palettisation.
Ce transfert se fait normalement sur des convoyeurs à bande, à rouleaux motorisés, etc.

On connaît déjà un dispositif utilisant, pour transférer des charges d'un endroit à un autre, un dispositif comprenant un plateau horizontal rotatif associé à des billes libres en rotation, ces billes faisant saillie de chaque côté du plateau. Ce dispositif comporte également des premiers et des seconds moyens pour appliquer aux billes des mouvements de rotation dans un sens ou dans l'autre. Un tel dispositif est décrit plus en détail dans la demande de brevet européen EP-A1-0 369 133.

Les charges sont, en principe, de structure parallélépipédique, telle que des paquets de plaques de carton, et ces paquets se suivent les uns derrière les autres.

Ce processus est classique, mais il ne résoud pas le problème du regroupement des paquets lorsqu'on veut, en fin de parcours, établir un assemblage de charges accotées parallèlement et longitudinalement pour former une couche de plusieurs paquets.

Le but de l'invention est de proposer une machine permettant notamment le déplacement latéral à gauche ou à droite d'une charge arrivant en amont, et ceci en continu et avec une valeur réglable du déplacement latéral, c'est-à-dire en combinant les mouvements longitudinaux et latéraux, et d'une manière plus générale, le mouvement de déplacement des charges suivant une direction quelconque par rapport au sens d'acheminement des charges sur la machine, en vue de transférer celles-ci sur un dispositif de reprise avec le positionnement désiré.

A cet effet, l'invention a pour objet une table à billes motorisées pour le triage orthogonal de charges plates, constituée :
- d'un plateau horizontal du type à billes libres en rotation, disposées dans ledit plateau et faisant saillie des deux côtés de celui-ci;
- de moyens disposés sous le plateau et supportant chacune desdites billes en un seul point de contact;
- de premiers moyens pour appliquer aux billes, aux points de contact avec lesdits moyens de support, un premier mouvement de rotation, autour d'un premier axe horizontal, dans un sens ou dans l'autre;
- de seconds moyens pour appliquer aux billes, auxdits points de contact, un second mouvement de rotation, autour d'un second axe horizontal, dans un sens ou dans l'autre, lesdits seconds moyens créant un mouvement relatif horizontal entre le plateau et les premiers moyens;
- de moyens pour commander et contrôler l'application et l'amplitude desdits premier et second mouvement de rotation en sorte d'appliquer aux billes, auxdits points de contact, un mouvement de rotation résultant d'amplitude variable et autour, d'un quelconque, au choix, des azimuts du référentiel plan défini par lesdits premier et second axes;
- de moyens pour amener les charges à traiter et les placer sur les billes du plateau, et
- de moyens pour collecter les charges en sortie de plateau, la direction dudit mouvement relatif horizontal entre le plateau et les premiers moyens étant parallèle audit premier axe horizontal.

Suivant un premier mode de mise en oeuvre de la table selon l'invention, lesdits moyens de support des billes sont constitués par un tapis sans fin, supporté par des moyens de support appropriés, lesdits premiers moyens pour appliquer aux billes ledit premier mouvement rotatif dans ledit premier axe sont constitués, d'une part, par ledit tapis sans fin dont le brin supérieur est en contact avec les billes et, d'autre part, par des moyens d'entraînement dans un sens ou dans l'autre dudit tapis, et lesdits seconds moyens pour appliquer aux billes ledit second mouvement de rotation dans ledit second axe sont des moyens propres à créer, entre le plateau et le tapis, un mouvement relatif suivant une direction orthogonale à la direction de déplacement dudit tapis.

Les moyens propres à créer un tel mouvement relatif entre le plateau et le tapis consistent par exemple en des moyens pour déplacer le plateau en translation sur le tapis, lequel circule sur des rouleaux d'axe fixe, des moyens étant prévus pour guider le plateau.

Avantageusement, un dispositif de nettoyage du tapis, par brosse, racleur ou autre dispositif, est prévu en vue d'évacuer les poussières et les déchets de carton.

Suivant un second mode de mise en oeuvre du dispositif de l'invention, lesdits moyens de support des billes sont constitués par des rouleaux disposés horizontalement, côte à côte et sur lesquels reposent les billes du plateau, lesdits premiers moyens pour appliquer aux billes ledit premier mouvement de rotation dans ledit premier axe sont constitués par des moyens d'entraînement en rotation synchronisée desdits rouleaux dans un sens ou dans l'autre et lesdits seconds moyens pour appliquer aux billes ledit second mouvement de rotation dans ledit second axe sont constitués par des moyens pour déplacer le plateau en translation parallèlement auxdits rouleaux, dans un sens ou dans l'autre, les axes des rouleaux étant fixes.

Suivant des variantes de réalisation de ce second mode de mise en oeuvre, les rouleaux de support et d'entraînement des billes sont répartis en groupes à commande indépendante les uns des autres, chaque groupe comprenant un nombre déterminé de rouleaux couvrant toute la largeur du plateau.

Chaque rouleau support et moteur peut aussi être constitué de plusieurs tronçons de rouleaux placés bout à bout et commandés indépendamment, plusieurs tronçons parallèles et adjacents pouvant être commandés en synchronisme en sorte de constituer sur le plateau des secteurs juxtaposés à l'intérieur de chacun desquels les billes sont entraînées en rotation dans une direction déterminée en vue de communiquer à une charge amenée sur la table tout mouvement de translation, rotation ou combinaison de ces deux déplacements, préparatoire à un placement correct de la charge dans un assemblage déterminé de charges identiques ou non.

D'autres caractéristiques et avantages du dispositif de l'invention ressortiront de la description qui va suivre des modes de réalisation, description donnée à titre d'exemple uniquement et en regard des dessins annexés sur lesquels :
- Figure 1 est une vue de dessus d'une table selon l'invention, suivant un premier mode de réalisation ;
- Figure 2 est une vue en élévation frontale de la table de la figure 1 ;
- Figure 3 est une vue de gauche de la table de la figure 2 ;
- Figure 4 est une vue de dessus d'un second mode de réalisation d'une table selon d'invention ;
- Figure 5 est une vue en élévation frontale de la table de la figure 4 ;
- Figure 6 est une vue de gauche de la table de la figure 5 ;
- Figure 7 est une vue en élévation d'une variante de réalisation de la table des figures 4 à 6 ;
- Figure 8 est une vue en élévation frontale de la table de la figure 7 ;
- Figure 9 est une vue de gauche de la table de la figure 8 ;
- Figure 10 représente un rouleau support et moteur de la table des figures 7 à 9 ;
- Figure 11 est une vue de dessus schématique d'une installation d'empilage multicouche de colis accotés, intégrant une table selon l'invention, suivant un mode de mise en oeuvre selon les figures 1 à 3 ;
- Figure 12 est une vue en élévation frontale de l'installation de la figure 11 ;
- Figure 13 est une vue en coupe selon la ligne XIII-XIII de la table à billes des figures 11 et 12 ;
- Figure 14 est une vue en perspective plongeante de la table à billes des figures 11 à 13, et
- Figure 15 est une vue en coupe selon la ligne XV-XV de l'installation des figures 11 et 12.

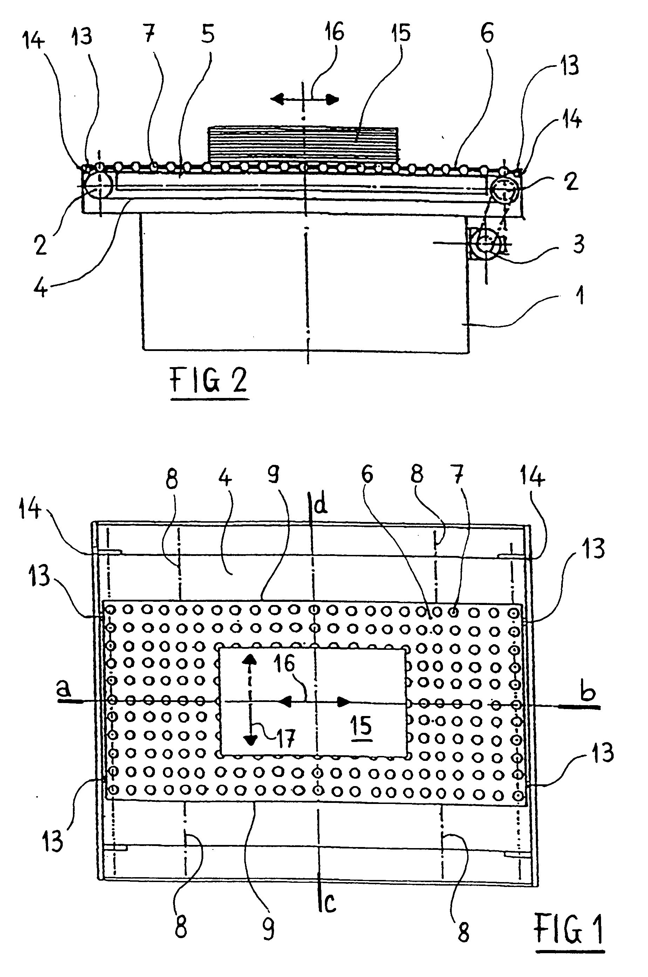

La table à billes de triage selon l'invention représentée sur les figures 1 à 3 comprend un bâti 1 supportant des rouleaux 2 d'entraînement, par l'intermédiaire d'un moteur 3, d'un tapis sans fin horizontal 4 revêtu d'un élastomère et défilant suivant l'axe a-b (figure 1) et reposant, par la face inférieure du brin supérieur, sur un support plan horizontal 5 porté par le bâti 1. Sur la face supérieure du brin supérieur du tapis 4 repose un plateau horizontal 6 rigide, percé de trous dans lesquels sont disposées, à la manière connue, des billes 7 en matériau dur, libres en rotation et faisant saillie sur les deux faces opposées du plateau 6, les billes 7 étant réparties régulièrement à équidistance les unes des autres suivant des alignements perpendiculaires correspondant respectivement à la longueur (axe a-b) et à la largeur (axe c-d) du plateau 6.

Le plateau 6 est mobile suivant l'axe c-d, orthogonal à la direction de déplacement du tapis 4, par l'intermédiaire de chaînes 8 fixées sur les côtés longitudinaux 9 du plateau 6, se déplaçant sur le tapis 4, au moyen de pignons de renvoi 10 et entraînées par l'intermédiaire d'une attache 11 montée sur la tige d'un vérin 12 solidaire du bâti 1.

La largeur du plateau 6 (axe c-d) est inférieure à la largeur du tapis 4 et le plateau est supporté et guidé le long de ses bords latéraux par l'intermédiaire de galets 13 circulant dans des glissières 14 solidaires du bâti 1.

Les glissières 14 permettent de maintenir le plateau 6 à une distance du tapis 4 suffisante pour que les billes 7 dépassent du plateau, au-dessus et au-dessous, les billes reposant sous l'effet de leur poids sur le tapis 4.

Les matériaux constituant le plateau 6, les billes 7 et le tapis sont choisis de façon à résister à l'usure due aux frottements.

En variante, le plateau 6 peut être muni de douilles interchangeables de guidage des billes 7.

Le tapis 4 peut se déplacer dans un sens comme dans l'autre, à une vitesse réglable.

De même, le plateau 6 peut être déplacé, dans un sens ou dans l'autre, à une vitesse réglable.

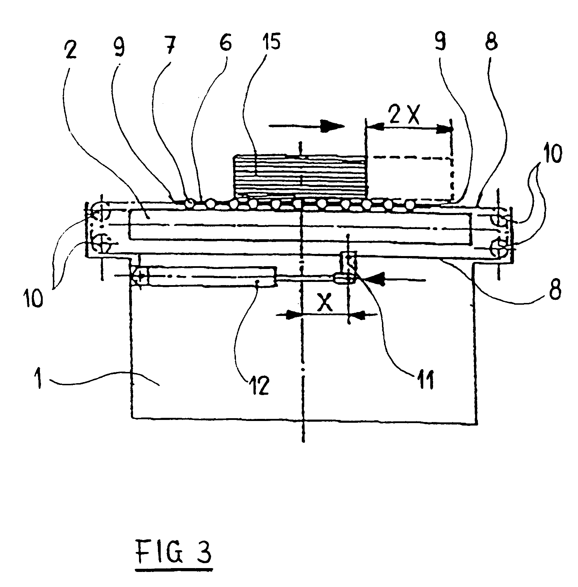

Il est à noter que tout déplacement X (fig. 3) du plateau 6 entraîne un déplacement 2X d'une charge 15 placée sur le plateau 6 du fait de la multiplication apportée par la rotation des billes 7.

Par charges 15, on entend un objet plat, un empilement d'objets plats liés ou non liés ensemble, tels que par exemple des flans de carton, ou des objets à face plane.

Le fonctionnement du dispositif décrit ci-dessus est le suivant.

Le tapis 4 étant en fonctionnement, toute charge 15 arrivant dans le sens longitudinal, axe a-b (ou b-a), traversera la table à billes d'une manière rectiligne, si le plateau à billes 6 est immobile. Il n'est pas nécessaire que la charge soit dans l'axe de la table. Tout déplacement rectiligne dans l'axe a-b est possible dans la zone où cette charge 15 est supportée par les billes 7. Une charge 15 amenée sur la surface de la table à billes par le déplacement du tapis 4 peut être déplacée latéralement d'un côté ou de l'autre en faisant déplacer le plateau à billes 6 d'un côté ou de l'autre dans l'axe c-d. Ce déplacement latéral peut s'effectuer avec le tapis 4 arrêté ou en déplacement. En faisant déplacer ensemble le tapis 4 et le plateau 6 la charge 15 se déplace en biais, mais en restant parallèle aux bords 9 du plateau 6. En effet, dans ce cas, chaque bille 7 est soumise par le tapis 4 à un mouvement rotatif entraînant la charge 15 dans la direction de l'axe a-b et à un mouvement rotatif entraînant la charge 15 dans la direction de l'axe c-d en sorte que chaque bille est soumise à un mouvement qui est la résultante des deux mouvements rotatifs appliqués au point de contact de chaque bille 7 par le tapis 4. Ce mouvement rotatif résultant est, pour chaque bille 7, identique dans sa direction et dans son amplitude, en sorte que la charge 15 est soumise à une translation au-dessus de la table en direction de l'un ou l'autre des bords 9 du plateau 6.

Selon l'amplitude du mouvement rotatif exercé sur les billes 7, la charge 15 pourra être dirigée dans l'un quelconque des azimuts du système de référence défini par les deux axes horizontaux perpendiculaire a-b, c-d.

Si le tapis 4 fonctionne seul, la charge 15 se déplace, comme indiqué plus haut, dans l'un ou l'autre sens, dans la direction de l'axe a-b (double flèche 16, fig. 1), alors que si le vérin 12 agit seul, le tapis 4 étant arrêté, la charge 15 se déplace dans l'un ou l'autre sens, dans la direction de l'axe c-d (double flèche 17).

La combinaison des mouvements du tapis 4 et du plateau 6 permet toute orientation du déplacement de la charge 15 sur la table. Bien entendu, la table est avantageusement munie de moyens de programmation des vitesses de déplacement du tapis 4 et du plateau 6 définissant les paramètres de positionnement désirés de la charge 15.

La table est également munie de plaques d'arrêt fixes (non représentées) disposées parallèlement aux bords du plateau 6 et agencées de façon à permettre, au-dessous, le libre passage du plateau. La position latérale de ces plaques est déterminée en fonction du dispositif de réception des charges au sortir de la table.

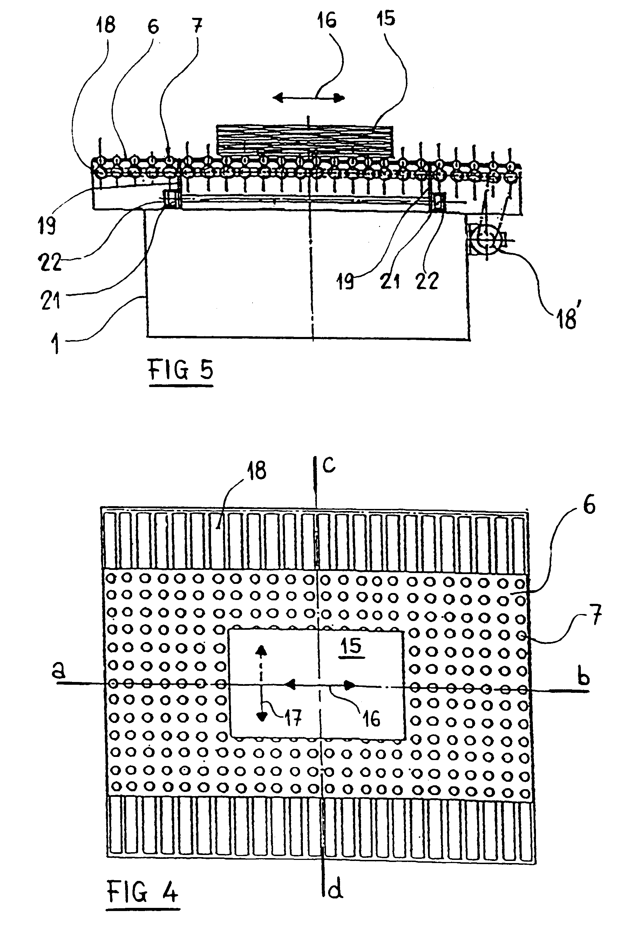

Les figures 4 à 6 illustrent un autre mode de réalisation dans lequel le plateau 6 est analogue à celui des figures 1 à 3 mais les billes 7 reposent sur des rouleaux motorisés 18 disposés parallèlement, côte à côte. Les rouleaux 18 sont entraînés en rotation par un moteur 18' dans un sens ou dans l'autre et à vitesse réglable, en synchronisme, et appliquent aux billes 7, aux points de contact, un mouvement rotatif de même direction que celui appliqué par le tapis 4 de la table des figures 1 à 3, c'est-à-dire selon la double flèche 16 (fig. 4).

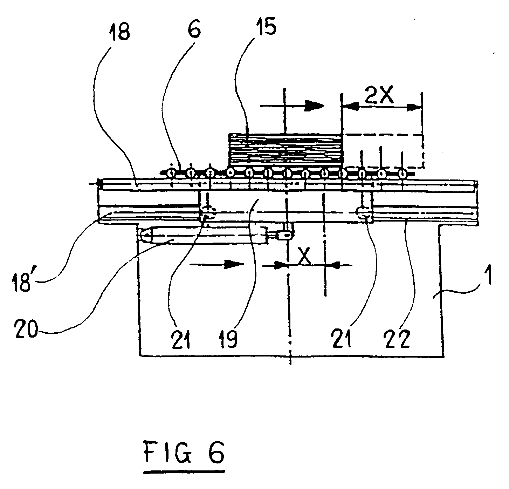

Le déplacement du plateau 6 est simplifié puisqu'il peut s'opérer par des plaques verticales 19 (fig. 5, 6) passant entre deux rouleaux 18. Ces plaques 19 supportent le plateau 6 à bonne hauteur, le guident et l'entraînent grâce à un vérin 20 solidaire du bâti 1 et relié auxdites plaques 19 par des éléments de liaison appropriés, l'ensemble étant guidé par un système à galets 21 circulant dans des glissières fixes 22.

Le principe de fonctionnement de ce mode de réalisation est identique à celui du mode de réalisation des fig. 1 à 3. Au cours du déplacement en translation suivant la direction c-d du plateau 6, chaque rangée de billes 7 en regard de l'un des rouleaux 18 se déplace en roulant le long dudit rouleau.

Les rouleaux 18 sont revêtus par exemple d'un élastomère permettant un bon entraînement des billes. Il est à remarquer que ce mode de réalisation présente, entre autres, l'avantage d'autoriser, par rapport au mode de réalisation des figures 1 à 3, une meilleure évacuation des poussières et des déchets de carton provenant des charges. Il s'ensuivra donc un meilleur fonctionnement du dispositif, cela en raison du fait que l'organe de transmission du mouvement rotatif aux billes ne s'encrassera pas ou du moins pas aussi rapidement que dans le mode de réalisation représenté aux figures 1 à 3.

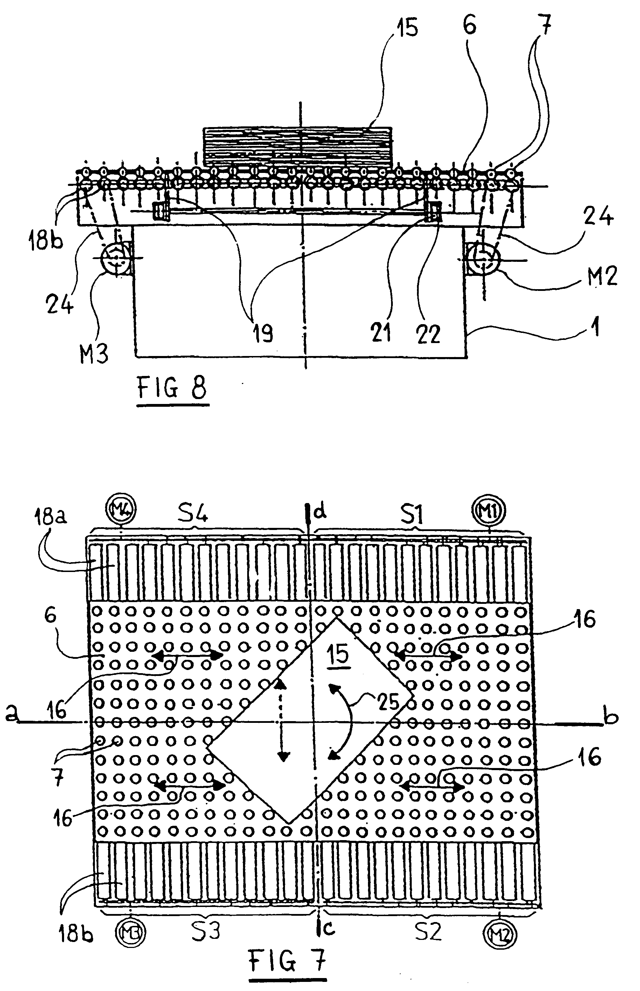

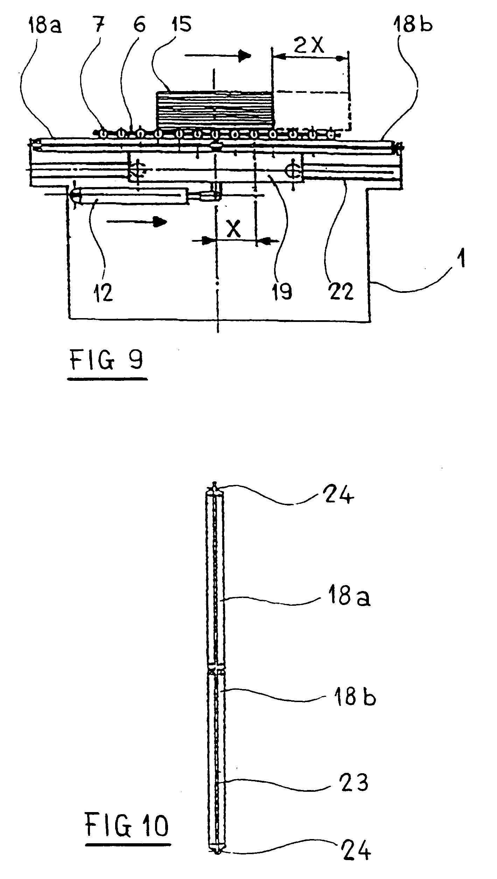

Dans la variante illustrée par les figures 7 à 10, les rouleaux supports et moteurs 18 sont subdivisés en quatre secteurs S1 à S4. Chaque rouleau de support et d'entraînement des billes 7 est en fait constitué de deux petits rouleaux 18a et 18b (fig 10) montés et entraînés de manière indépendante sur un même arbre fixe 23.

Chaque rouleau 18a, 18b est entraîné, par l'intermédiaire d'un système à pignons et chaînes 24, ou à courroies tangentielles, à partir d'un moteur porté par le bâti 1. A chaque secteur S1 à S4 est associé un moteur (M1 à M4) entraînant en synchronisme tous les rouleaux du secteur considéré.

Les rouleaux 18a 18b sont aboutés de manière que leurs génératrices soient pratiquement continues pour ne pas créer d'à-coups au passage des billes 7 du rouleau 18a au rouleau 18b ou inversement.

Un automatisme est prévu pour gérer ou programmer le fonctionnement des moteurs M1 à M4 en vue d'obtenir les déplacements désirés de la charge sur le plateau 6.

Si les quatre moteurs M1 à M4 tournent à la même vitesse et dans le même sens, toutes les billes 7 du plateau seront entraînées (doubles flèches 16, fig. 7) comme dans le cas du tapis 4 ou des rouleaux 18, en supposant que le plateau 6 est immobile.

Si les moteurs M1 à M4 sont arrêtés et que le plateau est déplacé selon la direction c-d, la charge 15 est déplacée en translation suivant ladite direction c-d.

Par contre, si une selection est faite dans le sens du fonctionnement des moteurs M1 à M4, par exemple M1 et M4, d'une part, M2 et M3 d'autre part, dans le même sens, on peut, après avoir fait entrer deux charges 15 parallèlement de part et d'autre de l'axe a-b, les dissocier longitudinalement en arrêtant les moteurs M1 et M4, ou M2 et M3, ou inversement.

Il est avantageux d'utiliser des moteurs à vitesse variable, avec ou sans programmation préalable.

Le principe de dissocier des secteurs de rouleaux moteurs permet d'innombrables combinaisons et des redressements de trajectoires sont possibles. Eventuellement, des rotations (double flèche 25) de la charge 15 sont possibles, sans avoir à déplacer le plateau 6.

En principe, lorsque le plateau 6 est déplacé dans l'axe c-d, tous les secteurs S1 à S4 fonctionnent de la même manière, la dissociation du fonctionnement des secteurs n'intervenant qu'avec un plateau 6 immobile et centré sur le système d'axes de référence a-b, c-d.

Le suivi du mouvement des charges peut être assuré par exemple par des capteurs photo-électriques (non représentés) ou d'autres dispositifs, de manière à pouvoir agir sur des automatismes spécifiques (non représentés) gérant, en association avec le déplacement latéral du plateau 6, la distribution des charges.

Bien que l'on ait décrit une table à quatre secteurs S1 à S4, le nombre de ces secteurs peut être inférieur ou supérieur à ce nombre. Ainsi, aux secteurs S1, S2 peut être substitué un secteur unique, de même pour les secteurs S3, S4, tous les rouleaux de la table étant des rouleaux uniques 18 tels que ceux des fig.4 à 6.

Pour des machines de grand format, il est même possible de prévoir chaque rouleau 18 en un nombre de tronçons supérieur à deux, bout à bout. Ainsi, une troisième section centrale indépendante pourrait être entraînée par dessous, par une courroie tangentielle par exemple.

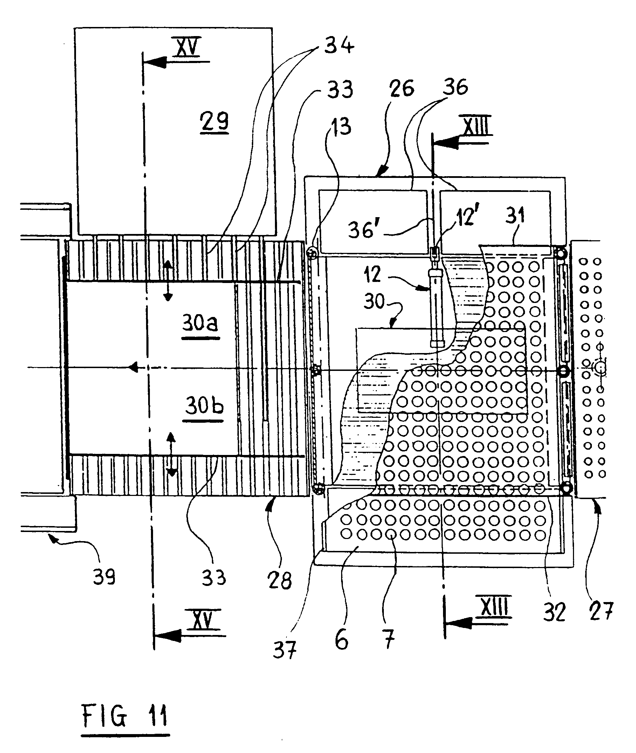

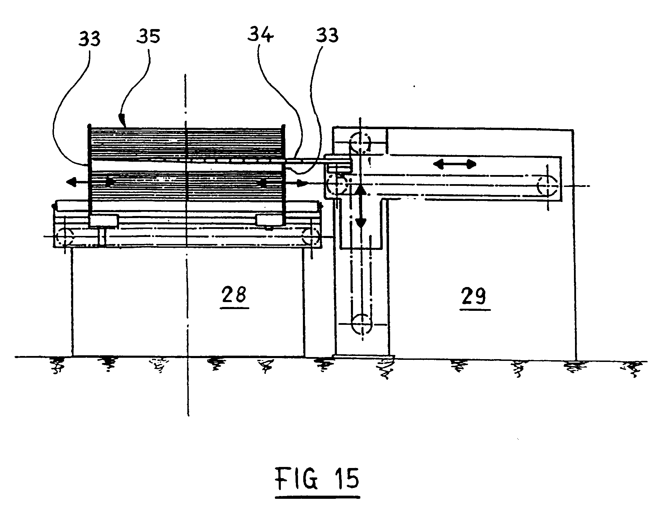

Les fig.11 à 15 illustrent une table selon l'invention et plus précisément du type des fig 1 à 3, intégrée dans une installation d'assemblage multicouches de paquets accotés.

Cette installation comprend une table de triage à billes 26 selon l'invention, alimentée en paquets à traiter par une table d'alimentation à rouleaux 27.

La table de triage 26 délivre les paquets à une table de taquage 28 à laquelle est associée latéralement un système 29 de superposition des couches de paquets.

Les organes de la table 26 homologues structurellement ou fonctionnellement de ceux de la table des fig 1 à 3 portent les mêmes références numériques.

Les paquets sont amenés les uns à la suite des autres sur le plateau 6 qui est, au repos, centré, c'est-à-dire avec son axe longitudinal dans le prolongement de celui de la table d'alimentation 27.

L'installation sert par exemple à accoter des paquets. A cet effet, le plateau 6 étant dans ladite position centrale, un paquet, symbolisé en 30 sur la figure 11, est amené au centre de la table de triage 26, par l'actionnement du tapis 4, le plateau 6 demeurant immobile. Le positionnement correct du paquet 30 est déterminé par des capteurs à cellules photo-électriques portés par deux plaques latérales de taquage 31 et 32, disposées au-dessus du plateau 6, latéralement à celui-ci. De telles plaques 31, 32 (non représentées sur les tables des fig 1 à 9) sont montées fixes, bien que pouvant être réglées éventuellement en position, et de façon à permettre le déplacement latéral du plateau 6. Les plaques 31, 32 servent de butées de retenue des paquets à l'intérieur de la zone utile délimitée par les tables 27 et 28.

Une fois le paquet 30 arrêté au centre du plateau 6, ce dernier est déplacé latéralement par un vérin 12, vers l'une ou l'autre des plaques 31,32. Le vérin 12 est agencé horizontalement sous le plateau 6, dans sa zone centrale, entre les brins supérieur et inférieur du tapis 4. Sa tige est reliée par une attache 12' à l'un des bords du plateau 6. Au cours du déplacement du plateau, les billes 7 poussent le paquet 30, à une vitesse double de celle du plateau, vers la plaque concernée. Une fois accoté contre la plaque (31 ou 32), le tapis 4 est remis en action pour transférer le paquet sur la table 28.

Le paquet 30 suivant sera accoté contre l'autre plaque (32 ou 31) par le plateau 6, pour être transféré sur la table 28 où les deux paquets 30 présents seront taqués par des plaques 33 pour former une couche de deux paquets 30a et 30b accolés.

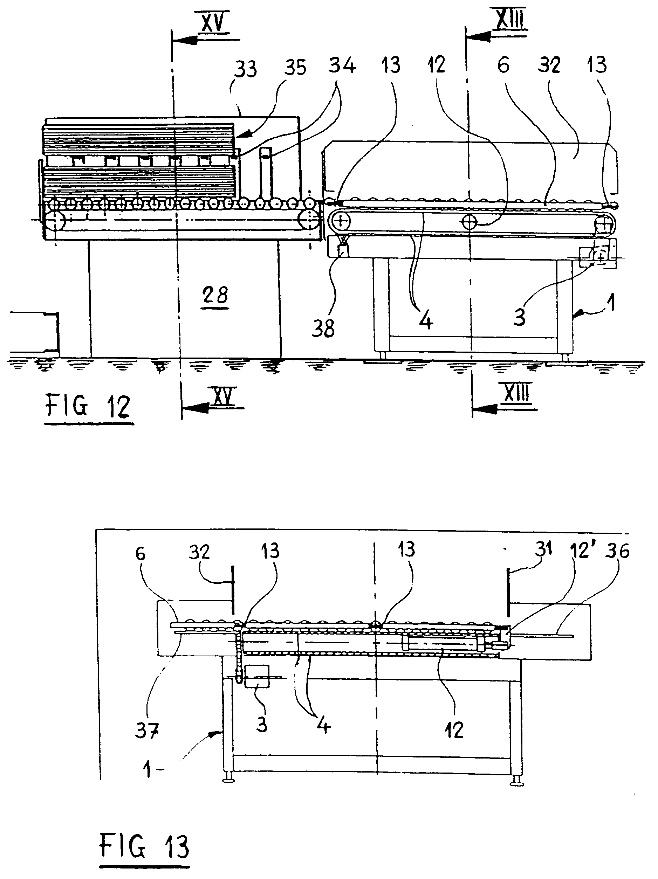

Le dispositif 29 à fourches 34 permet de soulever une couche 35 (fig 12) de paquets pour constituer un empilage.

Pour réduire les temps, l'accotement de chaque paquet 30 sur la table 26 se fera en combinant le déplacement sur le plateau 6 du paquet suivant l'axe longitudinal avec le déplacement latéral du plateau 6, dès que le paquet 30 est suffisamment engagé sur le plateau 6, en sorte de faire déplacer le paquet en crabe en direction de la plaque 31 ou de la plaque 32.

Après évacuation complète du plateau 6 du paquet 30, le plateau 6 revient dans la position centrale.

On a représenté, en traits pleins sur la figure 11, le déport latéral maximal du plateau 6, côté plaque 32.

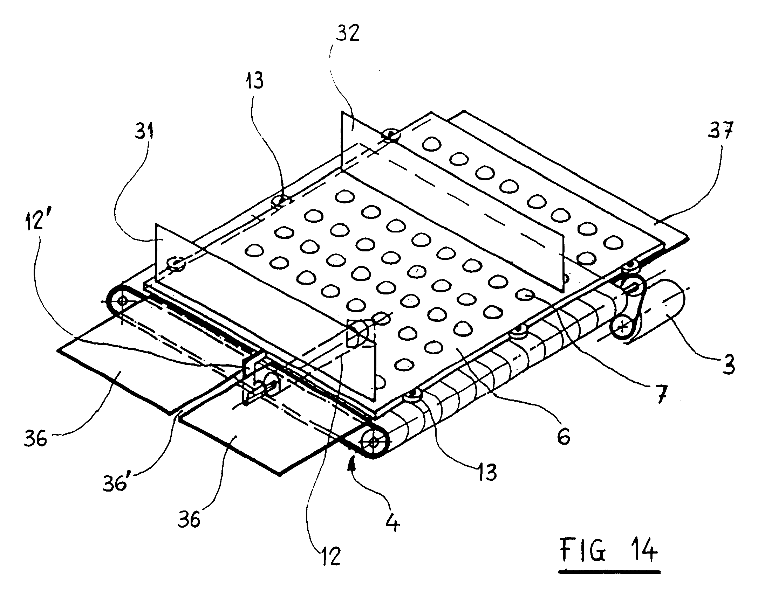

Le tapis 4 ne couvre (fig 13) que la longueur utile correspondant à la distance entre les plaques 31, 32. Au delà, le plateau 6 et les billes 7 sont supportés par des plateaux fixes en débordement, dans le prolongement du brin supérieur du tapis 4 et de son support 5. Côté vérin 12 (figures 11 et 14), un tel plateau, 36, est échancré en 36' dans sa zone centrale, pour permettre le passage de l'attache 12', l'autre plateau, 37, n'étant pas échancré.

Par ailleurs, le tapis 4 est avantageusement muni (figure 12) d'un dispositif 38 de nettoyage tel qu'une brosse ou un racleur ou tout autre système.

L'installation permet des empilages multicouches avec divers positionnements mutuels des paquets de chaque couche, avec puits central ou non.

Si l'installation en amont de la table de triage 26 ne permet pas la présentation des paquets suivant différentes positions, on peut utiliser une table de triage du type de la fig 7 pour effectuer les redressements nécessaires.
les empilages formés sur la table 28 seront ensuite évacués sur le système de palettisation 39.

Enfin, l'invention n'est évidemment pas limitée aux modes de réalisation représentés et décrits ci-dessus mais en couvre au contraire toutes les variantes, notamment en ce qui concerne les moyens pour appliquer aux billes 7, aux points de contact avec leur support, les mouvements rotatifs suivant deux directions perpendiculaires, ainsi qu'en ce qui concerne les moyens de support, guidage et d'entraînement du plateau mobile 6.

## Revendications

1. Table à billes motorisées à mouvements croisés pour le triage orthogonal de charges plates (15, 30), constituée :
- d'un plateau horizontal (6) du type à billes (7) libres en rotation, disposées dans ledit plateau (6) et faisant saillie des deux côtés de celui-ci;
- de moyens (4, 5, 18) disposés sous le plateau (6) et supportant chacune desdites billes (7) en un seul point de contact;
- de premiers moyens (4, 18) pour appliquer aux billes, aux points de contact avec lesdits moyens de support, un premier mouvement de rotation, autour d'un premier axe horizontal (a-b), dans un sens ou dans l'autre;
- de seconds moyens (12, 20) pour appliquer aux billes, auxdits points de contact, un second mouvement de rotation, autour d'un second axe horizontal (c-d), dans un sens ou dans l'autre, lesdits seconds moyens créant un mouvement relatif horizontal entre le plateau et les premiers moyens;
- de moyens pour commander et contrôler l'application et l'amplitude desdits premier et second mouvement de rotation en sorte d'appliquer aux billes (7), auxdits points de contact, un mouvement de rotation résultant d'amplitude variable et autour, d'un quelconque, au choix, des azimuts du référentiel plan défini par lesdits premier et second axes (a-b, c-d);
- de moyens (27) pour amener les charges à traiter et les placer sur les billes du plateau (6), et
- de moyens (28) pour collecter les charges en sortie de plateau (6), caractérisée en ce que la direction dudit mouvement relatif horizontal entre le plateau (6) et les premiers moyens (4, 18) est parallèle audit premier axe horizontal (a-b).

2. Table suivant la revendication 1, caractérisée en ce que lesdits moyens de support des billes (7) sont constitués par un tapis sans fin (4), supporté par des moyens de support appropriés (5), lesdits premiers moyens pour appliquer aux billes ledit premier mouvement de rotation dans ledit premier axe (a-b) sont constitués, d'une part, par ledit tapis sans fin (4) dont le brin supérieur est en contact avec les billes et, d'autre part, par des moyens (2, 3) d'entraînement dans un sens ou dans l'autre dudit tapis, et lesdits seconds moyens pour appliquer aux billes ledit second mouvement de rotation dans ledit second axe (c-d) sont des moyens (8, 11, 12) propres a créer entre le plateau (6) et le tapis (4) un mouvement relatif suivant une direction orthogonale à la direction de déplacement dudit tapis.

3. Table suivant la revendication 2, caractérisée en ce que les moyens propres à créer un tel mouvement relatif entre le plateau (6) et le tapis (4) consistent en des moyens (8, 11, 12) pour déplacer le plateau en translation sur le tapis, lequel circule sur des rouleaux (2) d'axe fixe, des moyens (13, 14) étant prévus pour guider le plateau.

4. Table suivant la revendication 3, caractérisée en ce que les moyens pour déplacer le plateau (6) sont constitués par des chaînes sans fin (8) fixées sur les côtés latéraux (9) du plateau et passant sur le tapis (4), lesdites chaînes (8) étant entraînées par un vérin (12).

5. Table suivant la revendication 1, caractérisée en ce que lesdits moyens de support des billes (7) sont constitués par des rouleaux (18) disposés horizontalement, côte à côte et sur lesquels reposent les billes du plateau (6), lesdits premiers moyens pour appliquer aux billes ledit premier mouvement de rotation dans ledit premier axe (a-b) sont constitués par des moyens (18') d'entraînement en rotation synchronisée desdits rouleaux (18) dans un sens ou dans l'autre et lesdits second moyens pour appliquer aux billes ledit second mouvement de rotation dans ledit second axe (c-d) sont constitués par des moyens (19, 20) pour déplacer le plateau (6) en translation parallèlement auxdits rouleaux (18), dans un sens ou dans l'autre, les axes des rouleaux (18) étant fixes.

6. Table suivant la revendication 5, caractérisée en ce que les moyens pour déplacer le plateau (6) sont constitués par des plaques (19) fixées sous le plateau, passant entre les rouleaux (18) de support et d'entraînement des billes (7) et entraînées par le vérin (20), lesdites plaques (19) étant supportées et guidées par un dispositif à galets (21) et cornières (22).

7. Table suivant la revendication 5, caractérisée en ce que les rouleaux (18) de support et d'entraînement des billes (7) sont répartis en groupes à commande indépendante les uns sur les autres, chaque groupe comprenant un nombre déterminé de rouleaux (18) couvrant toute la largeur du plateau (6).

8. Table suivant la revendication 5, caractérisée en ce que chaque rouleau (18) support et moteur est constitué de plusieurs tronçons de rouleaux (18a, 18b) placés bout à bout et commandés indépendamment par des moteurs (M1 à M4), plusieurs tronçons parallèles et adjacents pouvant être commandés en synchronisme en sorte de constituer sur le plateau (6) des secteurs juxtaposés (S1 à S4) à l'intérieur de chacun desquels les billes (7) sont entraînées en rotation dans une direction déterminée.

9. Table suivant l'une des revendications 1 à 8, caractérisée en ce qu'elle comporte des plaques de taquage (31, 32) montées fixes mais réglables au-dessus du plateau (6) transversalement à la direction de déplacement (c-d) dudit plateau.

10. Table suivant la revendication 9, caractérisée en ce que lesdites plaques de taquage (31, 32) sont disposées sensiblement à l'aplomb des bords ou extrémités des moyens (4, 18) d'entraînement des billes (7), ceux-ci étant prolongés, latéralement à la table, de plateaux (36,37) de support du plateau (6) et des billes (7) en position de déport latéral dudit plateau.

11. Table suivant les revendications 3 et 10 prises ensemble, caractérisée en ce que les moyens pour déplacer le plateau (6) en translation sur le tapis (4) sont constitués par un vérin horizontal fixe (12) disposé entre les brins supérieur et inférieur du tapis (4) et relié à l'un des bords du plateau, l'un desdits plateaux (36) de support du plateau (6) et des billes (7) en position de déport latéral du plateau étant échancré (36') pour le passage de l'élément (12') de liaison dudit vérin (12) au plateau (6).

12. Table suivant l'une des revendications 2 à 4 et 11, caractérisée en ce que le tapis (4) est muni d'un dispositif de nettoyage (38), tel qu'une brosse ou un racleur.

## Claims

1. Table with crosswise operating motor-driven carrier balls designed for orthogonal sorting of flat workpieces (15, 30), comprising;
- a horizontal tray (6) with freely rotating carrier balls (7) arranged within the said tray (6) so as to protrude on both sides of the latter;
- means (4, 5, 18) arranged underneath the tray (6) and supporting the said carrier balls (7) at one contact point;
- primary means (4, 18) imparting to the carrier balls at their contact points with the said supporting means an initial rotary motion in the first horizontal axis (a-b), either this way or that way;
- secondary means (12, 20) imparting to the carrier balls at their contact points a second rotary motion in the second horizontal axis (c-d), either this way or that way, the said second means creating a relative horizontal motion between the tray and the primary means;
- means for controlling and checking the application and amplitude of the said first and second rotary motions so as to impart to the carrier balls (7) at their contact points a rotary motion resulting from a variable amplitude in any direction of the referential plane defined by the said first and second axes;
- means (27) for carrying the workpieces to be processed onto the balls of the tray (6), and
- means (28) for collecting the workpieces at the outlet of the tray (6), characterized by the fact that the direction of the said motion between the tray (6) and the primary means (4, 18) is parallel to the first horizontal axis (a-b).

2. Table according to claim 1, characterized by the fact that the said means for supporting the carrier balls (7) consist of an endless belt (4), itself supported by appropriate supporting means (5), whereby the said primary means for imparting to the carrier balls the said initial rotary motion in the said first axis (a-b) consist of the said endless belt (4) whose upper part is in contact with the carrier balls, as well as of the means (2, 3) for driving the said belt either this way or that way, and whereby the secondary means for imparting to the carrier balls the said second rotary motion in the said second axis (c-d) are means (8, 11, 12) appropriate for generating between the tray (6) and the belt (4) a relative motion orthogonal to the motion of the said belt.

3. Table according to claim 2, characterized by the fact that the means allowing to generate such a relative motion between the tray (6) and the belt (4) consist of means (8, 11, 12) for shifting the tray on the belt which moves on rollers (2) running on a fixed axle, means (13, 14) being foreseen for guiding the tray.

4. Table according to claim 3, characterized by the fact that the means for shifting the tray (6) consist of endless chains (8) fitted on the sides (9) of the tray and running along the belt (4), the said chains (8) being driven by a jack (12).

5. Table according to claim 1, characterized by the fact that the said means for supporting the carrier balls (7) consist of rollers (18) arranged horizontally side by side and supporting the balls of the tray (6), the said first means for imparting to the balls the said first rotary motion in the said first axis (a-b) consist of means (18') for synchronously rotating the said rollers (18) either this way or that way, and that the second means for imparting to the balls the said second rotary motion in the said second axis (c-d) consist of means (19, 20) for shifting the tray (6) parallelly to the said rollers (18) either this way or that way, the axles of the rollers (18) being fixed.

6. Table according to claim 5, characterized by the fact that the means for shifting the tray (6) consist of plates (19) fitted underneath the tray and passing between the supporting and driving rollers (18) of the carrier balls (7) and driven by the jack (20), the said plates (19) being supported and guided by a system of rollers (21) and sliding bars (22).

7. Table according to claim 5, characterized by the fact that the supporting and driving rollers (18) of the carrier balls (7) are assembled in independently driven groups, every group comprising a determined number of rollers (18) covering the whole width of the tray (6).

8. Table according to claim 5, characterized by the fact that every supporting and driving roller (18) consists of small portions of rollers (18a, 18b) arranged side by side and independently driven by the motors (M1 to M4), several parallel and adjacent portions being likely to be controlled synchronously so as to make up on the tray (6) juxtaposed sections (S1 to S4) within which the carrier balls (7) are rotated in a determined direction.

9. Table according to one of the claims 1 to 8, characterized by its including aligning plates (31, 32) in fixed position, though adjustable, above the tray (6) crosswise to the axis (c-d) of the said tray.

10. Table according to claim 9, characterized by the fact that the said aligning plates (31, 32) are more or less topping the edges or ends of the means (4, 18) used for driving the carrier balls (7), the latter being extended sidewise to the table by trays (36, 37) supporting the tray (6) and the carrier balls (7) when the tray is in sidewise offside position.

11. Table according to claims 3 and 10 considered collectively, characterized by the fact that the means for shifting the tray (6) crosswise on the belt (4) consist of a fixed horizontal jack (12) arranged between the upper and lower parts of the belt (4) and linked to one of the tray edges, one of the said trays (36) supporting the tray (6) and the carrier balls (7) when the tray is in sidewise offside position being provided with a recess (36') thus enabling the passage of the fixture (12') of the said jack (12) onto the tray (6).

12. Table according to one of the claims 2 to 4 and 11, characterized by the belt (4) being provided with a cleaning device (38) such as a brush or a scraper.

## Patentansprüche

1. Tisch mit rechtwinklig laufenden, angetriebenen Kugeln zum orthogonalen Sortieren flacher Gegenstände (15, 30) mit :
- einer horizontalen Platte (6) mit frei rotierenden Kugeln (7), die in der besagten Platte (6) angeordnet sind und aus derselben auf beiden Seiten herausragen;
- Mitteln (4, 5, 18), die unter der Platte (6) angeordnet sind, und die einzelnen Kugeln (7) an einem einzigen Punkt abstützen;
- ersten Mitteln (4, 18), um den Kugeln an den Konktaktpunkten mit den besagten Abstützmitteln eine erste Rotationsbewegung um eine erste horizontale Achse (a-b) in der einen oder anderen Richtung mitzuteilen;
- zweiten Mitteln (12, 20), um den Kugeln an den besagten Kontaktpunkten eine zweite Rotationsbewegung um eine zweite horizontale Achse (c-d) in der einen oder anderen Richtung mitzuteilen, wobei die besagten zweiten Mittel eine relative horizontale Bewegung zwischen der Platte und den ersten Mitteln hervorrufen;
- Mitteln zur Steuerung und Kontrolle der Einwirkung und Reichweite der besagten ersten und zweiten Rotationsbewegung, um den Kugeln (7) an den besagten Kontaktpunkten eine Rotationsbewegung mit variabler Reichweite und in einer beliebigen Richtung der Bezugsfläche, die durch die besagte erste und zweite Achse (a-b, c-d) gebildet werden, mitzuteilen;
- Mitteln (27) zum Transport der zu verarbeitenden Gegenstände auf die Kugeln der Platte (6) zu bringen und entsprechend anzuordnen, sowie
- Mitteln (28) zur Abnahme der Gegenstände am Ausgang der Platte (6), dadurch gekennzeichnet, dass die Richtung der relativen horizontalen Bewegung zwischen der Platte (6) und den ersten Mitteln (4, 18) parallel zur besagten horizontalen ersten Achse (a-b) liegt.

2. Tisch gemäss Patentanspruch 1, dadurch gekennzeichnet, dass die besagten Mittel zum Abstützen der Kugeln (7) aus einem Endlosförderband (4) bestehen, das von geeigneten Abstützmitteln (5) getragen wird, wobei die besagten ersten Mittel zur Übertragung der besagten ersten Rotationsbewegung auf die Kugeln in der besagten ersten Achse (a-b) einerseits aus dem besagten Endlosförderband (4), dessen oberes Trumm mit den Kugeln in Kontakt steht, und andererseits aus Mitteln (2, 3) zum Antrieb des besagten Förderbands in der einen oder anderen Richtung, bestehen, und die besagten zweiten Mittel zur Übertragung der besagten zweiten Rotationsbewegung auf die Kugeln in der besagten zweiten Achse (c-d) Mittel (8, 11, 12) darstellen, die zwischen der Platte (6) und dem Förderband (4) eine relative Bewegung, die einer orthogonalen Richtung in bezug auf die Laufrichtung des besagten Förderbands entspricht, hervorzurufen vermögen.

3. Tisch gemäss Patentanspruch 2, dadurch gekennzeichnet, dass die Mittel zur Bewirkung einer relativen Bewegung zwischen der Platte (6) und dem Förderband (4) aus Mitteln (8, 11, 12) zur Parallelverschiebung der Platte auf dem Förderband, das um Rollen (2) mit ortsfester Achse läuft, bestehen, wobei entsprechende Mittel (13, 14) zum Führen der Platte vorgesehen sind.

4. Tisch gemäss Patentanspruch 3, dadurch gekennzeichnet, dass die Mittel zum Verschieben der Platte (6) aus Umlaufketten (8), die an den Seiten (9) der Platte befestigt sind und auf dem Förderband (4) laufen, bestehen, wobei die besagten Ketten (8) durch einen Druckzylinder (12) angetrieben werden.

5. Tisch gemäss Patentanspruch 1, dadurch gekennzeichnet, dass die Mittel zum Abstützen der Kugeln (7) aus horizontal nebeneinander angeordneten Rollen (18), auf welchen die Kugeln der Platte (6) aufliegen, bestehen, die besagten ersten Mittel zur Übertragung der besagten ersten Rotationsbewegung auf die Kugeln in der besagten ersten Achse (a-b) aus Mitteln (18') zum sychronen Rotationsantrieb der besagten Rollen (18) in der einen oder anderen Richtung, und die besagten zweiten Mittel zur Übertragung der besagten zweiten Rotationsbewegung auf die Kugeln in der besagten zweiten Achse (c-d) aus Mitteln (19, 20) zur Parallelverschiebung der Platte (6) parallel zu dem besagten Rollen (18) in der einen oder anderen Richtung, wobei die Achsen der Rollen (18) ortsfest sind.

6. Tisch gemäss Patentanspruch 5, dadurch gekennzeichnet, dass die Mittel zum Verschieben der Platte (6) aus unter der Platte angebrachen Platten (19) bestehen, die zwischen den Rollen (18) zur Abstützung und zum Antrieb der Kugeln (7) durchlaufen und durch den Druckzylinder (20) angetrieben werden, wobei die Platten (19) durch eine Vorrichtung mit Rollen (21) und Winkelstücken (22) abgestützt und geführt werden.

7. Tisch gemäss Patentanspruch 5, dadurch gekennzeichnet, dass die Stütz- und Treibrollen (18) der Kugeln (7) in voneinander unabhängig angetriebenen Gruppen verteilt sind, wobei jede Gruppe eine bestimmte Anzahl Rollen (18), die die gesamte Breite der Platte (6) abdecken, umfasst.

8. Tisch gemäss Patentanspruch 5, dadurch gekennzeichnet, dass jede Stütz- und Treibrolle (18) aus mehreren aneinandergereihten und unabhängig durch die Motoren (M1 bis M4) angetriebenen Rollenteilstrecken (18a, 18b) besteht, wobei mehrere parallele und nebeneinander angeordnete Teilstrecken synchron angetrieben werden können, um auf der Platte (6) nebeneinander angeordnete Abschnitte (S1 bis S4) zu bilden, in welchen die Kugeln (7) in einer bestimmten Richtung in Drehbewegung versetzt werden.

9. Tisch gemäss einem der Patentanspruche 1 bis 8, dadurch gekennzeichnet, dass er mit festen, jedoch quer zur Verschieberichtung (c-d) der besagten Platte einstellbaren Anschlagplatten (31, 32) versehen ist.

10. Tisch gemäss Patentanspruch 9, dadurch gekennzeichnet, dass die besagten Anschlagplatten (31, 32) mehr oder weniger auf die Ränder oder Enden der Mittel (4, 18) zum Antrieb der Kugeln (7) ausgerichtet sind, wobei die letzteren seitlich zum Tisch mittels Platten (36, 37) verlängert sind, die zum Abstützen der Platte (6) und der Kugeln (7) bei seitlicher Ausladung der Platte dienen.

11. Tisch gemäss den Patentansprüchen 3 und 10 insgesamt, dadurch gekennzeichnet, dass die Mittel zum Verschieben der Platte (6) in Parallelbewegung auf dem Förderband (4) aus einem ortsfesten horizontalen Druckzylinder (12), der zwischen dem oberen und unteren Trumm des Förderbands (4) angeordnet und mit einem der Ränder der Platte verbunden ist, wobei eine der besagten Platte (36) zum Abstützen der Platte (6) und der Kugeln (7) bei seitlicher Ausladung der Platte einen Ausschnitt (36') für den Durchgang des Verbindungsstücks (12') des Druckzylinders (12) an der Platte (6) aufweist.

12. Tisch gemäss einem der Patentansprüche 2 bis 4 und 11, dadurch gekennzeichnet, das das Förderband (4) mit einer Reinigungsvorrichtung (38), wie zum Beispiel einer Bürste oder einem Schaber, versehen ist.
